# EUROPEAN PATENT APPLICATION

(11) **EP 4 456 659 A1**
(43) Date of publication of application: **30.10.2024**
(21) Application number: 24171597.8
(22) Date of filing: 22.04.2024
(51) Int. Cl.: H04W 84/12, H04W 74/00, H04W 74/0808, H04W 74/08

(54) **UPLINK TRANSMIT OPPORTUNITY BURSTING**

(30) Priority: 24.04.2023 US 202363497789 P; 16.04.2024 US 202418636541
(71) Applicant: Apple Inc., Cupertino, CA 95014 (US)
(72) Inventor: KNECKT, Jarkko L., Cupertino, California 95014 (US); HEDAYAT, Ahmad Reza, Cupertino, California 95014 (US); LIU, Yong, Cupertino, California 95014 (US); THAKUR, Sidharth R., Cupertino, California 95014 (US); WANG, Qi, Cupertino, California 95014 (US); GHOSH, Chittabrata, Cupertino, California 95014 (US); WU, Tianyu, Cupertino, California 95014 (US); VERMA, Lochan, Cupertino, California 95014 (US); YONG, Su Khiong, Cupertino, California 95014 (US); JIANG, Jinjing, Cupertino, California 95014 (US); MEHRNOUSH, Morteza, Cupertino, California 95014 (US)
(74) Representative: Simmons & Simmons

(57) **Abstract**

This disclosure relates to methods for managing uplink transmit opportunity bursting for wireless local area networking. A wireless device may initiate a transmit opportunity to perform an uplink transmission to an access point. The wireless device may receive an acknowledgement from the access point. The acknowledgement may include an indication that the wireless device can initiate a second transmit opportunity without wireless medium contention. The wireless device may initiate the second transmit opportunity without wireless medium contention based at least in part on the indication received from the access point.

## Description

### TECHNICAL FIELD

The present application relates to wireless communication, including techniques and devices for managing uplink transmit opportunity bursting for wireless local area networking.

### DESCRIPTION OF THE RELATED ART

Wireless communication systems are ubiquitous. Further, wireless communication technology has evolved from voice-only communications to also include the transmission of data, such as Internet and multimedia content.

Mobile electronic devices, or stations (STAs) or user equipment devices (UEs) may take the form of smart phones or tablets that a user typically carries. One aspect of wireless communication that may commonly be performed by mobile devices may include wireless networking, for example over a wireless local area network (WLAN), which may include devices that operate according to one or more communication standards in the IEEE 802.11 family of standards. Such communication can be performed in an infrastructure setting as well as in a peer-to-peer setting.

Managing medium access in a WLAN scenario can often include balancing efficiency with latency, among various possible considerations. As the evolution of wireless communication technology over time expands the range of wireless medium use cases, and as the number of generations of wireless devices that may wish to access a wireless medium increases, so does the challenge of providing effective and fair medium access management techniques. Accordingly, improvements in the field are desired.

### SUMMARY

Embodiments are presented herein of, *inter alia,* systems, apparatuses, and methods for devices to manage uplink transmit opportunity bursting for wireless local area networking.

A wireless device may include one or more antennas, one or more radios operably coupled to the one or more antennas, and a processor operably coupled to the one or more radios. The wireless device may be configured to establish a connection with an access point through a wireless local area network (WLAN) over one or multiple wireless links, or may be an access point configured to establish a connection with one or more other wireless devices through a WLAN over one or multiple wireless links. The wireless device may operate in each of the wireless links using a respective radio of the one or more radios.

According to the techniques described herein, a wireless device that is performing an uplink transmission to an access point may request permission from the access point to continue with an uplink transmit opportunity burst. The access point may determine whether to allow the uplink transmit opportunity burst to continue, for example based on whether it would potentially impact the transmission of latency sensitive data, and may provide an indication of whether the wireless device can continue with the uplink transmit opportunity burst. This may allow the wireless device to perform a more efficient contention-free series of transmit opportunities at least some of the time, while also providing increased scheduling flexibility for the access point to reduce delays for low latency data transmissions, at least according to some embodiments.

Techniques are also described herein for a wireless device to request a longer transmit opportunity duration than the configured limit for the access category of a transmit opportunity, and for an access point to respond to indicate an allowed transmit opportunity duration, which could also be longer than the configured limit for the access category of the transmit opportunity. Such techniques may similarly be used to improve wireless medium use efficiency, potentially with limited or no impact to scheduling flexibility for an access point to service low latency data transmissions, and may be used in conjunction with the access point managed uplink transmit opportunity bursting techniques if desired, at least according to some embodiments.

The techniques described herein may be implemented in and/or used with a number of different types of devices, including but not limited to cellular phones, tablet computers, accessory and/or wearable computing devices, portable media players, access points, base stations, and other network infrastructure equipment, servers, unmanned aerial vehicles, unmanned aerial controllers, automobiles and/or motorized vehicles, and any of various other computing devices.

This summary is intended to provide a brief overview of some of the subject matter described in this document. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

A better understanding of the present subject matter can be obtained when the following detailed description of the embodiments is considered in conjunction with the following drawings.
Figure 1 illustrates an example wireless communication system including a wireless device, according to some embodiments;
Figure 2 is a block diagram illustrating an example wireless device, according to some embodiments;
Figure 3 is a block diagram illustrating an example network element or access point, according to some embodiments;
Figure 4 is a flowchart diagram illustrating an example method for managing uplink transmit opportunity bursting for wireless local area networking, according to some embodiments;
Figure 5 illustrates an example timeline according to which a best effort transmission could cause delay to a transmission of low latency data and/or interfere with a restricted target wake time service period start time, according to some embodiments;
Figure 6 illustrates an example timeline according to which uplink transmit opportunity truncation could be performed, according to some embodiments;
Figure 7 illustrates an example timeline according to which an access point managed uplink transmit opportunity bursting approach can be used, according to some embodiments;
Figures 8-9 illustrate example aspects of a possible generalized approach to transmit opportunity bursting using a short transmit opportunity limit, according to some embodiments;
Figures 10-11 illustrate example aspects of a possible generalized approach to transmit opportunity bursting using a long transmit opportunity limit, according to some embodiments;
Figures 12-14 illustrate aspects of various example scenarios with bursting of short transmit opportunities in which preemption between those transmit opportunities without control response transmission is possible, according to some embodiments;
Figure 15 illustrates an example timeline for a scenario in which an access point can allow a transmit opportunity with a duration that is longer than the transmit opportunity limit based on a wireless station request in an uplink data transmission, according to some embodiments;
Figure 16 illustrates an example timeline for a scenario in which an access point can allow a transmit opportunity with a duration that is longer than the transmit opportunity limit based on a wireless station request in a multi-user request-to-send frame, according to some embodiments;
Figure 17 illustrates example timelines for scenarios in which uplink data associated with multiple access categories can be transmitted in a multi- traffic-identifier packet or a multi-traffic-identifier transmit opportunity burst, according to some embodiments;
Figures 18-19 illustrate example uplink and downlink transmission scenarios in which stream classification service scheduled data transmissions could be prevented from occurring at the correct time due to long data transmissions; and
Figure 20 illustrates aspects of an example restricted target wake time service period timeline, at least according to some embodiments.

While the features described herein are susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

### DETAILED DESCRIPTION

### Terminology

The following are definitions of terms used in this disclosure:
**Memory Medium** - Any of various types of non-transitory memory devices or storage devices. The term "memory medium" is intended to include any computer system memory or random-access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The term "memory medium" may include two or more memory mediums which may reside in different locations, e.g., in different computer systems that are connected over a network. The memory medium may store program instructions (e.g., embodied as computer programs) that may be executed by one or more processors.
**Carrier Medium** - a memory medium as described above, as well as a physical transmission medium, such as a bus, network, and/or other physical transmission medium that conveys signals such as electrical, electromagnetic, or digital signals.
**Computer System** - any of various types of computing or processing systems, including a personal computer system (PC), server-based computer system, wearable computer, network appliance, Internet appliance, smartphone, television system, grid computing system, or other device or combinations of devices. In general, the term "computer system" can be broadly defined to encompass any device (or combination of devices) having at least one processor that executes instructions from a memory medium.
**User Equipment (UE) (or "UE Device")** - any of various types of computer systems or devices that are mobile or portable and that perform wireless communications. Examples of UE devices include mobile telephones or smart phones (e.g., iPhone^{™}, Android^{™}-based phones), portable gaming devices, laptops, wearable devices (e.g., smart watch, smart glasses), portable Internet devices, music players, data storage devices, or other handheld devices, automobiles and/or motor vehicles, unmanned aerial vehicles (UAVs) (e.g., drones), UAV controllers (UACs), etc. In general, the term "UE" or "UE device" can be broadly defined to encompass any electronic, computing, and/or telecommunications device (or combination of devices) which is easily transported by a user and capable of wireless communication.
**Wireless Device or Station (STA)** - any of various types of computer systems or devices that perform wireless communications. A wireless device can be portable (or mobile) or may be stationary or fixed at a certain location. The terms "station" and "STA" are used similarly. A UE is an example of a wireless device.
**Communication Device** - any of various types of computer systems or devices that perform communications, where the communications can be wired or wireless. A communication device can be portable (or mobile) or may be stationary or fixed at a certain location. A wireless device is an example of a communication device. A UE is another example of a communication device.
**Base Station or Access Point (AP)** - The term "Base Station" (also called "eNB" or "gNB") has the full breadth of its ordinary meaning, and at least includes a wireless communication station installed at a fixed location and used to communicate as part of a wireless communication system. The term "access point" (or "AP") is typically associated with Wi-Fi based communications and is used similarly.
**Processing Element (or Processor)** - refers to various elements or combinations of elements that are capable of performing a function in a device, e.g., in a communication device or in a network infrastructure device. Processors may include, for example: processors and associated memory, circuits such as an ASIC (Application Specific Integrated Circuit), portions or circuits of individual processor cores, entire processor cores, processor arrays, programmable hardware devices such as a field programmable gate array (FPGA), and/or larger portions of systems that include multiple processors, as well any of various combinations of the above.
**IEEE 802.11** - refers to technology based on IEEE 802.11 wireless standards such as 802.11a, 802.11.b, 802.11g, 802.11n, 802.11-2012, 802.11ac, 802.11ad, 802.11ax, 802.11ay, 802.11be, and/or other IEEE 802.11 standards. IEEE 802.11 technology may also be referred to as "Wi-Fi" or "wireless local area network (WLAN)" technology.
**Configured to** - Various components may be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors may be configured to electrically connect a module to another module, even when the two modules are not connected). In some contexts, "configured to" may be a broad recitation of structure generally meaning "having circuitry that" performs the task or tasks during operation. As such, the component can be configured to perform the task even when the component is not currently on. In general, the circuitry that forms the structure corresponding to "configured to" may include hardware circuits.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

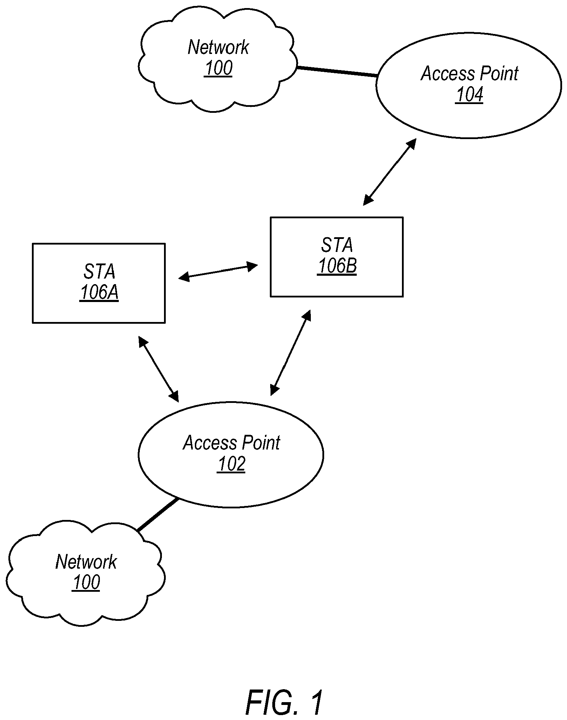

### Figures 1-2 - Wireless Communication System

Figure 1 illustrates an example of a wireless communication system. It is noted that Figure 1 represents one possibility among many, and that features of the present disclosure may be implemented in any of various systems, as desired. For example, embodiments described herein may be implemented in any type of wireless device. The wireless embodiment described below is one example embodiment.

As shown, the exemplary wireless communication system includes an access point (AP) 102, which communicates over a transmission medium with one or more wireless devices 106A, 106B, etc. Wireless devices 106A and 106B may be user devices, such as stations (STAs), non-AP STAs, or WLAN devices.

The STA 106 may be a device with wireless network connectivity such as a mobile phone, a hand-held device, a wearable device, a computer or a tablet, an unmanned aerial vehicle (UAV), an unmanned aerial controller (UAC), an automobile, or virtually any type of wireless device. The STA 106 may include a processor (processing element) that is configured to execute program instructions stored in memory. The STA 106 may perform any of the method embodiments described herein by executing such stored instructions. Alternatively, or in addition, the STA 106 may include a programmable hardware element such as an FPGA (field-programmable gate array), an integrated circuit, and/or any of various other possible hardware components that are configured to perform (e.g., individually or in combination) any of the method embodiments described herein, or any portion of any of the method embodiments described herein.

The AP 102 may be a stand-alone AP or an enterprise AP, and may include hardware that enables wireless communication with the STA devices 106A and 106B. The AP 102 may also be equipped to communicate with a network 100 (e.g., a WLAN, an enterprise network, and/or another communication network connected to the Internet, among various possibilities). Thus, the AP 102 may facilitate communication among the STA devices 106 and/or between the STA devices 106 and the network 100. In other implementations, AP 102 can be configured to provide communications over one or more wireless technologies, such as any, any combination of, or all of 802.11 a, b, g, n, ac, ad, ax, ay, be and/or other 802.11 versions, or a cellular protocol, such as 5G or LTE, including in an unlicensed band (e.g., LAA, NR-U).

The communication area (or coverage area) of the AP 102 may be referred to as a basic service area (BSA) or cell. The AP 102 and the STAs 106 may be configured to communicate over the transmission medium using any of various radio access technologies (RATs) or wireless communication technologies, such as Wi-Fi, LTE, LTE-Advanced (LTE-A), 5G NR, ultra-wideband (UWB), etc.

AP 102 and other similar access points (not shown) operating according to one or more wireless communication technologies may thus be provided as a network, which may provide continuous or nearly continuous overlapping service to STA devices 106A-B and similar devices over a geographic area, e.g., via one or more communication technologies. A STA may roam from one AP to another directly, or may transition between APs and cellular network cells.

Note that at least in some instances a STA device 106 may be capable of communicating using any of multiple wireless communication technologies. For example, a STA device 106 might be configured to communicate using one or more of Wi-Fi, LTE, LTE-A, 5G NR, UWB, Bluetooth, one or more satellite systems, etc. Other combinations of wireless communication technologies (including more than two wireless communication technologies) are also possible. Likewise, in some instances a STA device 106 can be configured to communicate using only a single wireless communication technology.

As shown, the exemplary wireless communication system also can include an access point (AP) 104, which communicates over a transmission medium with the wireless device 106B. The AP 104 also provides communicative connectivity to the network 100. Thus, according to some embodiments, wireless devices may be able to connect to either or both of the AP 102 (or a cellular base station) and the AP 104 (or another access point) to access the network 100. For example, a STA may roam from AP 102 to AP 104 based on one or more factors, such as coverage, interference, and capabilities. Note that it may also be possible for the AP 104 to provide access to a different network (e.g., an enterprise Wi-Fi network, a home Wi-Fi network, etc.) than the network to which the AP 102 provides access.

The STAs 106A and 106B may include handheld devices such as smart phones or tablets, wearable devices such as smart watches or smart glasses, and/or may include any of various types of devices with wireless communication capability. For example, one or more of the STAs 106A and/or 106B may be a wireless device intended for stationary or nomadic deployment such as an appliance, measurement device, control device, etc.

The STA 106B may also be configured to communicate with the STA 106A. For example, the STA 106A and STA 106B may be capable of performing direct device-to-device (D2D) communication. In some embodiments, such direct communication between STAs may also or alternatively be referred to as peer-to-peer (P2P) communication. The direct communication may be supported by the AP 102 (e.g., the AP 102 may facilitate discovery, among various possible forms of assistance), or may be performed in a manner unsupported by the AP 102. Such P2P communication may be performed using 3GPP-based D2D communication techniques, Wi-Fi-based P2P communication techniques, UWB, BT, and/or any of various other direct communication techniques, according to various embodiments.

The STA 106 may include one or more devices or integrated circuits for facilitating wireless communication, potentially including a Wi-Fi modem, a cellular modem, and/or one or more other wireless modems. The wireless modem(s) may include one or more processors (processor elements) and various hardware components as described herein. The STA 106 may perform any of (or any portion of) the method embodiments described herein by executing instructions on one or more programmable processors. For example, the STA 106 may be configured to perform techniques for uplink transmit opportunity bursting in a wireless communication system, such as according to the various methods described herein. Alternatively, or in addition, the one or more processors may be one or more programmable hardware elements such as an FPGA (field-programmable gate array), or other circuitry, that is configured to perform any of the method embodiments described herein, or any portion of any of the method embodiments described herein. The wireless modem(s) described herein may be used in a STA device as defined herein, a wireless device as defined herein, or a communication device as defined herein. The wireless modem described herein may also be used in an AP, a base station, a pico cell, a femto cell, or other similar network side device.

The STA 106 may include one or more antennas for communicating using one or more wireless communication protocols or radio access technologies. In some embodiments, the STA 106 might be configured to communicate using a single shared radio. The shared radio may couple to a single antenna, or may couple to multiple antennas (e.g., for MIMO) for performing wireless communications. Alternatively, the STA 106 may include two or more radios, each of which may be configured to communicate via a respective wireless link. Other configurations are also possible.

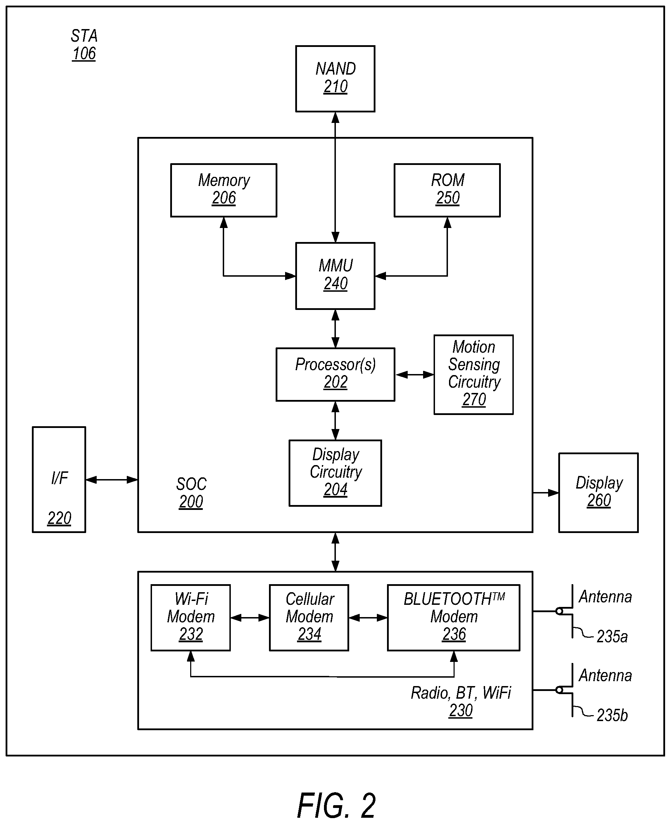

### Figure 2 - Example Block Diagram of a STA Device

Figure 2 illustrates one possible block diagram of a STA device, such as STA 106. In some instances, the STA 106 may additionally or alternatively be referred to as a UE 106. STA 106 also may be referred to as a non-AP STA 106. As shown, the STA 106 may include a system on chip (SOC) 200, which may include one or more portions configured for various purposes. For example, as shown, the SOC 200 may include processor(s) 202 which may execute program instructions for the STA 106, and display circuitry 204 which may perform graphics processing and provide display signals to the display 260. The SOC 200 may also include motion sensing circuitry 270 which may detect motion of the STA 106, for example using a gyroscope, accelerometer, and/or any of various other motion sensing components. The processor(s) 202 may also be coupled to memory management unit (MMU) 240, which may be configured to receive addresses from the processor(s) 202 and translate those addresses to locations in memory (e.g., memory 206, read only memory (ROM) 250, flash memory 210). The MMU 240 may be configured to perform memory protection and page table translation or set up. In some embodiments, the MMU 240 may be included as a portion of the processor(s) 202.

As shown, the SOC 200 may be coupled to various other circuits of the STA 106. For example, the STA 106 may include various types of memory (e.g., including NAND flash 210), a connector interface 220 (e.g., for coupling to a computer system, dock, charging station, etc.), the display 260, and wireless communication circuitry 230 (e.g., for LTE, LTE-A, NR, UWB, Bluetooth, Wi-Fi, NFC, GPS, etc.).

The STA 106 may include at least one antenna, and in some embodiments multiple antennas 235a and 235b, for performing wireless communication with access points, base stations, and/or other devices. For example, the STA 106 may use antennas 235a and 235b to perform the wireless communication. As noted above, the STA 106 may in some embodiments be configured to communicate wirelessly using multiple wireless communication standards or radio access technologies (RATs).

The wireless communication circuitry 230 may include a Wi-Fi modem 232, a Cellular modem 234, and a Bluetooth modem 236. The Wi-Fi modem 232 is for enabling the STA 106 to perform Wi-Fi or other WLAN communications, e.g., on an 802.11 network. The Bluetooth modem 236 is for enabling the STA 106 to perform Bluetooth communications. The cellular modem 234 may be a cellular modem capable of performing cellular communication according to one or more cellular communication technologies, e.g., in accordance with one or more 3GPP specifications.

As described herein, STA 106 may include hardware and software components for implementing embodiments of this disclosure. For example, one or more components of the wireless communication circuitry 230 (e.g., Wi-Fi modem 232, cellular modem 234, BT modem 236) of the STA 106 may be configured to implement part or all of the methods for performing uplink transmit opportunity bursting described herein, e.g., by a processor executing program instructions stored on a memory medium (e.g., a non-transitory computer-readable memory medium), a processor configured as an FPGA (Field Programmable Gate Array), and/or using dedicated hardware components, which may include an ASIC (Application Specific Integrated Circuit).

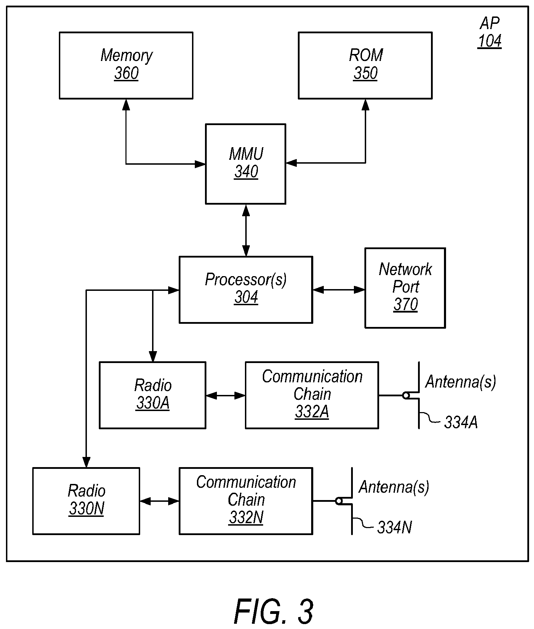

### Figure 3 - Block Diagram of an Access Point

Figure 3 illustrates an example block diagram of an access point (AP) 104, according to some embodiments. In some instances (e.g., in an 802.11 communication context), the AP 104 may also be referred to as a station (STA), and possibly more particularly as an AP STA. It is noted that the AP of Figure 3 is merely one example of a possible access point. As shown, AP 104 may include processor(s) 304 which may execute program instructions for the AP 104. The processor(s) 304 may also be coupled to memory management unit (MMU) 340, which may be configured to receive addresses from the processor(s) 304 and translate those addresses to locations in memory (e.g., memory 360 and read only memory (ROM) 350) or to other circuits or devices.

The AP 104 may include at least one network port 370. The network port 370 may be configured to couple to a network and provide multiple devices, such as STA devices 106, with access to the network, for example as described herein above in Figure 1.

The network port 370 (or an additional network port) may also or alternatively be configured to couple to a cellular network, e.g., a core network of a cellular service provider. The core network may provide mobility related services and/or other services to a plurality of devices, such as UE devices 106. In some cases, the network port 370 may couple to a telephone network via the core network, and/or the core network may provide a telephone network (e.g., among other UE devices serviced by the cellular service provider).

The AP 104 may include one or more radios 330A-330N, each of which may be coupled to a respective communication chain and at least one antenna 334, and possibly multiple antennas. The antenna(s) 334 may be configured to operate as a wireless transceiver and may be further configured to communicate with UE devices 106 via radio 330. The antenna(s) 334A-N communicate with their respective radios 330A-N via communication chains 332A-N. Communication chains 332 may be receive chains, transmit chains, or both. The radios 330A-N may be configured to communicate in accordance with various wireless communication standards, including, but not limited to, LTE, LTE-A, 5G NR, UWB, Wi-Fi, BT, etc. The AP 104 may be configured to operate on multiple wireless links using the one or more radios 330A-N, wherein each radio is used to operate on a respective wireless link.

The AP 104 may be configured to communicate wirelessly using one or multiple wireless communication standards. In some instances, the AP 104 may include multiple radios, which may enable the network entity to communicate according to multiple wireless communication technologies. For example, as one possibility, the AP 104 may include a 4G or 5G radio for performing communication according to one or more 3GPP communication standards as well as a Wi-Fi radio for performing communication according to Wi-Fi. In such a case, the AP 104 may be capable of operating as both a cellular base station and a Wi-Fi access point. As another possibility, the AP 104 may include a multi-mode radio which is capable of performing communications according to any of multiple wireless communication technologies (e.g., NR and Wi-Fi, NR and LTE, etc.). As still another possibility, the AP 104 may be configured to act exclusively as a Wi-Fi access point, e.g., without cellular communication capability.

As described further herein, the AP 104 may include hardware and software components for implementing or supporting implementation of features described herein such as performing uplink transmit opportunity bursting, among various other possible features. The processor 304 of the AP 104 may be configured to implement or support implementation of part or all of the methods described herein, e.g., by executing program instructions stored on a memory medium (e.g., a non-transitory computer-readable memory medium) to operate multiple wireless links using multiple respective radios. Alternatively, the processor 304 may be configured as a programmable hardware element, such as an FPGA (Field Programmable Gate Array), or ASIC (Application Specific Integrated Circuit), or a combination thereof. Alternatively (or in addition) the processor 304 of the AP 104, in conjunction with one or more of the other components 330, 332, 334, 340, 350, 360, 370 may be configured to implement or support implementation of part or all of the features described herein.

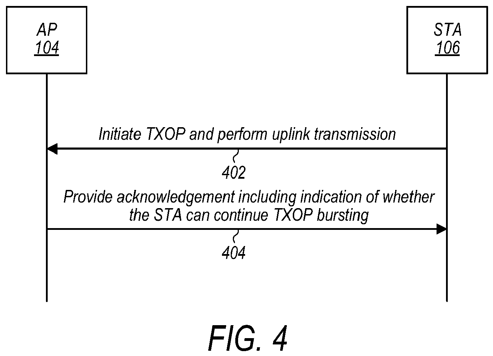

### Figure 4 - Uplink Transmit Opportunity Bursting

Wireless communication technology development may attempt to provide effective and efficient performance in a variety of use cases. In some instances, it may be possible that framework elements that benefit some use cases need to be balanced against framework elements that benefit other use cases. One possible example of this could include transmit opportunity duration limits for best effort or background traffic in comparison to low latency (e.g., voice or other low latency application) traffic. For (typically delay tolerant) best effort or background traffic, allowing longer transmit opportunity durations may increase medium use efficiency and overall throughput, and the potential for increased delays due to the potentially longer transmit opportunity durations may be of minimal or no import. For (typically delay intolerant) low latency traffic, the potential increase to medium use efficiency and overall throughput from allowing longer transmit opportunity durations may be of less significance than the potential for increased delays, and may have more potential for negative impact.

To balance such considerations, one possible approach could include setting lower transmit opportunity duration limits, but allowing transmit opportunity bursting to string together multiple transmit opportunities without the need for medium contention between those transmit opportunities under certain circumstances, such as when it is unlikely to increase delays for low latency / delay intolerant traffic. An access point that manages a wireless network in such a manner may be able to better support the latency needs of low latency traffic while still providing relatively efficient operation overall, at least according to some embodiments.

Figure 4 is a flowchart diagram illustrating such a method for managing uplink transmit opportunity bursting for wireless local area networking, according to some embodiments. In various embodiments, some of the elements of the method shown may be performed concurrently, in a different order than shown, may be substituted for by one or more other method elements, or may be omitted. Additional method elements may also be performed as desired.

Aspects of the method of Figure 4 may be implemented by a wireless device, such as an AP 104 or STA 106 illustrated in and described with respect to Figures 1-3, or more generally in conjunction with any of the computer circuitry, systems, devices, elements, or components shown in the Figures, among others, as desired. For example, a processor (and/or other hardware) of such a device may be configured to cause the device to perform any combination of the illustrated method elements and/or other method elements.

Note that while at least some elements of the method of Figure 4 are described in a manner relating to the use of communication techniques and/or features associated with IEEE 802.11 specification documents, such description is not intended to be limiting to the disclosure, and aspects of the method of Figure 4 may be used in any suitable wireless communication system, as desired. As shown, the method may operate as follows.

An AP wireless device (which may also be referred to herein as "AP" for convenience) may establish a wireless connection with another wireless device (which may also be referred to herein as a "station" or "STA" for convenience). The wireless connection may include an association established using Wi-Fi, a wireless connection established according to wireless communication techniques that are based at least part on Wi-Fi, and/or a wireless connection established according to any of various other wireless communication technologies, according to various embodiments.

In some embodiments, the wireless connection may include an infrastructure Wi-Fi connection. For example, the AP may provide beacon transmissions including information for associating with the AP, and one or more other wireless devices (e.g., non-AP wireless devices, which could include the STA) may request to associate with the AP using the information provided in the beacon transmissions, as one possibility.

In some embodiments, forming such an association may include the STA (and possibly other wireless devices associated to or potentially associating to the AP) receiving various configuration information from the AP. Such configuration information could include an indication of one or more transmit opportunity (TXOP) duration limits, as one possibility. For example, TXOP duration limits for each of multiple access categories (e.g., video, voice, best effort, background) could be configured. Additionally, or alternatively, such information could include any or all of information configuring stations in the network to initiate uplink TXOPs only with request to send (RTS) or multi-user (MU) RTS frames, an indication of whether multi-traffic-identifier (multi-TID) transmissions are supported, restricted target wake time service period (R-TWT SP) configuration information, stream classification service (SCS) configuration information, a maximum duration and/or number of uplink TXOPs allowed for an uplink TXOP burst, and/or any of various other possible types of information, according to various embodiments.

The STA may initiate a ("first") TXOP to perform a ("first") uplink transmission to the AP (402). The first TXOP may be obtained by the STA through medium contention, for example including using carrier sensing to determine whether the wireless medium is available and waiting for the duration of a backoff counter whose value is selected based at least in part on an access category associated with the first TXOP before beginning to transmit on the wireless medium, according to some embodiments.

The first uplink transmission may include data associated with the access category used to obtain the first TXOP. For example, it may be the case that at least one media access control protocol data unit (MPDU) of the first uplink transmission is of the access category in which the first TXOP is obtained. In some instances, for example if multi-TID transmissions are allowed in the wireless network, it may also be possible that data of one or more higher priority access categories can also be included in the first uplink transmission. Alternatively, it may be the case that multi-TID bursting is allowed, but that in the initial TXOP of an uplink TXOP burst, only data for the access category used to obtain the TXOP is allowed to be transmitted, in some instances.

In some instances, the STA may transmit a request to send (RTS) (possibly a multi-user (MU) RTS) to the AP as part of the first TXOP. The RTS may be transmitted based at least in part on the AP configuring STAs to initiate UL TXOPs with a RTS or MU-RTS frame, in some instances. In such a scenario, it may be possible that the STA includes an indication of a desired duration for the first TXOP in the RTS or MU-RTS frame, where the indicated desired duration can be longer than the TXOP duration limit for the access category of the first TXOP. In this case, the AP may provide a clear-to-send (CTS) frame to the STA in response to the RTS or MU-RTS frame. The CTS frame may include an indication of an allowed duration for the first TXOP, which could match the desired duration or be a different duration. For example, the AP might determine whether to allow the full requested duration or to allow a shorter duration than requested for the first TXOP based on stream classification service (SCS) scheduled low latency data transmission timing or restricted target wake time service period (R-TWT SP) timing, e.g., in order to avoid or minimize the impact of the first TXOP on latency sensitive communications. Providing support for a STA to request a longer TXOP duration than the configured TXOP limit in such a manner may thus have the potential to improve effective transmission rates while also supporting low delays for delay intolerant traffic, at least according to some embodiments.

In some embodiments, the first uplink transmission may include an indication of whether initiating another ("second") TXOP without wireless medium contention is requested by the STA. In other words, the STA may desire to perform another TXOP immediately after the first TXOP as part of an uplink TXOP burst. The indication could be explicit (e.g., a 1 bit flag indicating whether the STA is asking to continue the UL TXOP burst) or implicit (e.g., buffer status report (BSR) information indicating at least a certain amount of uplink data buffered at a STA may be taken as an implicit indication that the STA may continue the UL TXOP burst if allowed), in various embodiments. In some embodiments, the uplink transmission may include an indication of a desired duration for the second TXOP, which could be longer than the configured TXOP limit for the access category of the TXOP. It may also be possible that no indication of a desired duration for the second TXOP is indicated, for example if the TXOP limit provides sufficient duration for the second TXOP for the STA. Note further that it may also be possible that the STA does not include an indication of whether initiating another TXOP without wireless medium contention is desired by the STA.

The AP may provide an acknowledgement (e.g., a block acknowledgement or BA) to the STA in response to the first uplink transmission (404). The acknowledgement may include an indication of whether indication of whether the STA can initiate a second TXOP without wireless medium contention, e.g., in response to a request from the STA to initiate another TXOP without wireless medium contention, or possibly in an unsolicited manner. For example, the acknowledgement could include a 1 bit flag indicating whether the STA is allowed to continue the UL TXOP burst. In some instances, the acknowledgement could include an indication of an allowed duration for the second TXOP (e.g., if continuing the UL TXOP burst is allowed), which could function as an indication of whether continuing the UL TXOP burst is allowed (e.g., signaling a non-zero duration could indicate that continuing the UL TXOP burst is allowed while signaling a zero duration could indicate that continuing the UL TXOP burst is not allowed). The indicated duration could match the desired duration (if a desired duration is indicated by the STA) or could be a different duration. For example, the AP might determine whether to allow the full requested duration or to allow a shorter duration than requested for the second TXOP based on SCS scheduled low latency data transmission timing or R-TWT SP timing, e.g., in order to avoid or minimize the impact of the second TXOP on latency sensitive communications.

If the AP indicates that the STA can initiate a second TXOP without wireless medium contention, the STA may initiate the second TXOP without wireless contention based at least in part on the indication from the AP that doing so is allowed. The STA may perform another ("second") uplink transmission during the second TXOP. The second uplink transmission may include data associated with the access category used to obtain the second TXOP (e.g., which may be the same as for the first TXOP). Additionally, or alternatively, it may be the case that the second uplink transmission includes data of one or more higher priority access categories, for example if multi-TID transmissions are allowed.

In some instances, the second uplink transmission may also include an indication of whether initiating another ("third") TXOP without wireless medium contention is requested by the STA. Similarly, the AP may provide an indication of whether the STA can initiate another TXOP without wireless medium contention in an acknowledgement frame transmitted to the STA in response to the second uplink transmission. Such signaling may be performed according to any of the embodiments previously described herein, and may continue to be used to extend an uplink TXOP burst for as long as allowed by the AP, possibly up to a configured uplink TXOP burst limit (e.g., which could be defined in terms of total duration or number of uplink TXOPs for the burst, in various instances), at least according to some embodiments.

In some embodiments, at least some aspects of such techniques may be generalized, e.g., for use for multiple traffic directions. For example, aspects of such techniques may be used for downlink communication between an AP and a STA, and/or for peer-to-peer communication between peer devices, in various scenarios. Thus, it may be possible that any of an AP or a STA that supports such techniques may perform transmissions in preemptable TXOPs.

In some embodiments, such techniques may include configuration of a short `legacy' TXOP limit, as well as another parameter configured to indicate a maximum allowed number of TXOP continuations that can be performed (e.g., if no preemption occurs), possibly for each of multiple access categories. As another possibility, such techniques may include configuration of longer 'legacy' TXOP limit, as well as another parameter configured to indicate a shorter TXOP limit for wireless devices that support preemptable TXOPs (e.g., devices that support UHR Wi-Fi techniques, as one possibility). In this case, it may be possible that multiple of the shorter TXOPs may be chained together within the longer legacy TXOP limit for a TXOP, e.g., unless preemption occurs.

Whether TXOP preemption is requested may be indicated in such generalized scenarios using a control response frame, such as an acknowledgement frame, e.g., in a similar manner as previously described herein, at least as one possibility. As another possibility, an option for supporting preemption without control response frame transmission may also be possible. In such a scenario, a wireless device that is a TXOP initiator may determine whether a continuation TXOP can be initiated without wireless medium contention by waiting a certain amount of time (e.g., a priority interframe space (PIFS), as one possibility) before initiating the continuation TXOP, thus giving the TXOP responder wireless device an opportunity to preempt the continuation TXOP by transmitting after a shorter gap (e.g., a short interframe space (SIFS), as one possibility). Thus, if the TXOP responder wireless device does not transmit at that time and the wireless medium remains available after the designated gap between TXOPs, the TXOP initiator may determine that it can initiate another TXOP without wireless medium contention, and may proceed to transmit another PPDU. Note that it may still further be possible that a TXOP initiator wireless device can request a control response frame between TXOPs, e.g., to check whether preemption is requested, but does not need to. For example, a first transmission in the first TXOP could include a request for a control response frame, in which case the TXOP responder may provide the control response frame (e.g., including an indication of whether the first wireless device can initiate another TXOP without wireless medium contention), or could refrain from including such a request and leave a PIFS gap (or other configured gap) between short TXOPs initiated by the TXOP initiator wireless device.

Thus, according to the method of Figure 4, it may be possible for an AP to selectively allow uplink TXOP bursting and/or uplink TXOP durations over the configured uplink TXOP duration limit, for example when such operations would not interfere with low latency operations, and possibly for more generalized preemptable TXOP bursting to be supported. Such techniques may help to support low latency data transmissions while also achieving efficient wireless medium usage, and/or provide any of a variety of other possible benefits, at least according to some embodiments.

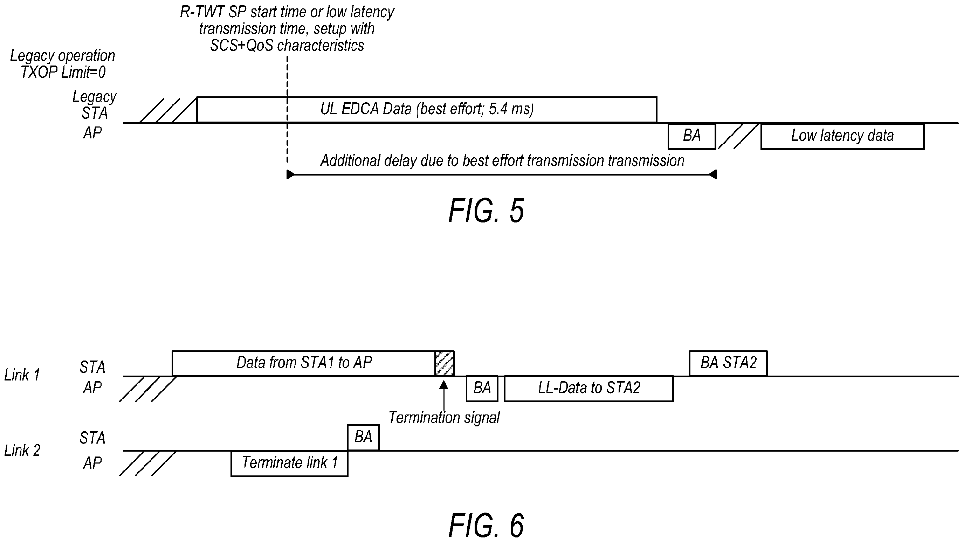

### Figures 5-20 and Additional Information

Figures 5-20 illustrate further aspects that might be used in conjunction with the method of Figure 4 if desired. It should be noted, however, that the exemplary details illustrated in and described with respect to Figures 5-20 are not intended to be limiting to the disclosure as a whole: numerous variations and alternatives to the details provided herein below are possible and should be considered within the scope of the disclosure.

It may be the case that an access point (AP) that provides a Wi-Fi network can control uplink (UL) enhanced distributed channel access (EDCA) transmission durations in the network through the EDCA parameter TXOPLimit[AC], which may indicate the maximum time an associated station (STA) is allowed to transmit in a given transmission opportunity (TXOP), for a given access category (AC). In some instances, the default TXOPLimit of the background and best effort access categories may be set to the value 0, which may correspond to a maximum duration of 5.488 ms for a physical layer protocol data unit (PPDU). Channel access by other devices may be prevented during this time period, potentially including for low latency data, which could in turn reduce or eliminate the benefits of low latency enhancements (e.g., access categories / traffic identifiers with prioritized access/treatment), at least in some embodiments. Figure 5 illustrates an example timeline according to which such a maximum allowed duration best effort PPDU transmission could cause delay to a transmission of low latency data and/or interfere with a restricted target wake time service period (R-TWT SP) start time, according to some embodiments.

In some instances, it may be possible for an AP to set lower TXOPLimit values, which may have the potential to reduce access delays to perform transmission of low latency data. However, absent other enhancements, this can also lower the overall EDCA throughput, for example by increasing the number of channel access occasions, which can lead to increased contention and collision occurrences, and/or due to increased overhead (e.g., preambles, short interframe spaces (SIFS), block acknowledgements (BAs)).

In some embodiments, it may be possible to support truncation of an UL TXOP, for example to preempt lower priority / latency insensitive data transmission in order to provide earlier channel access for a higher priority / latency sensitive data transmission. Figure 6 illustrates an example timeline according to which such UL TXOP truncation could be performed, according to some embodiments. It may be the case that an uplink transmitter is not able to receive termination signaling while it is transmitting. However, multi-link transmissions may enable cross link signaling to terminate an ongoing UL transmission. For example, in the illustrated scenario, termination signaling from an AP to a STA on link 2 may be used to indicate to terminate an uplink transmission from the STA to the AP on link 1. The STA may correspondingly terminate the uplink transmission, after which the AP may obtain medium access to perform a low latency transmission to another STA (or, in another scenario, to the same STA). Note, however, that at least in some instances, such cross link signaling may be relatively slow (e.g., due to AP and STA operating delays), and/or may increase overall overhead (e.g., due to the additional signaling and the termination of an ongoing transmission), when it is possible. Further, there may be scenarios in which a STA only has one link at a time available for transmissions (e.g., for power saving or due to device hardware constraints, among various possibilities), such that a STA is not available for such cross-link signaling.

Another possible approach to reducing access times for low latency data transmission may include supporting AP managed UL TXOP bursting. According to such an approach, if an associated STA and the AP are TXOP bursting capable, it may be the case that an indication can be included in a UL TXOP to signal whether the STA desires to continue for another UL TXOP. The BA from the AP may signal whether the STA may continue for another UL TXOP. If the continuation is not allowed, the AP may take over medium access after a priority interframe space (PIFS). The AP may transmit or trigger low latency frames according to stream classification service (SCS) signaling or TWT SPs. EDCA parameters set by the AP (and potentially either maintained internally in a manner transparent to associated STAs or signaled in configuration information for the wireless network) could include a TXOPBurstLimit (e.g., to set a limit to the duration of an uplink TXOP burst) and/or a maximum number of UL TXOP continuations allowed, e.g., to limit the duration of the TXOP bursting. At least in some embodiments, such an approach may be used in conjunction with setting shorter TXOPLimit values to reduce transmission delays for low latency data, with reduced contention and better efficiency in comparison to setting shorter TXOPLimit values alone. It should be noted, though, that such AP managed UL TXOP bursting may be used in conjunction with any TXOPLimit values, at least according to some embodiments.

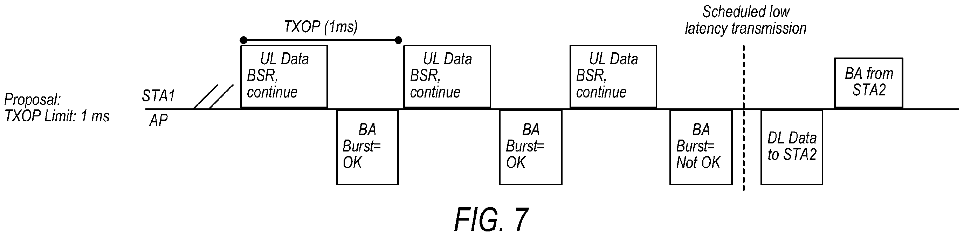

Figure 7 illustrates an example timeline according to which such an AP managed UL TXOP bursting approach can be used, at least according to some embodiments. In the illustrated scenario, TXOPLimits of all ACs may be set to a relatively short value (e.g., 1 ms, as one possibility). Thus, all associated STAs may transmit short UL EDCA PPDUs. As shown, a STA ("STA1") may initiate a TXOP and transmit UL data with an indication that continuing the UL TXOP burst is requested. An AP may transmit a BA in response with an indication that continuing the UL TXOP burst is OK. STA1 may continue the UL TXOP burst with another UL data transmission with an indication that continuing the UL TXOP burst is (again) requested. Again, the AP may transmit a BA in response with an indication that continuing the UL TXOP burst is OK. STA1 may accordingly continue the UL TXOP burst with a third UL data transmission with an indication that further continuation of the UL TXOP burst is requested. After the third UL data transmission in the burst, the AP may transmit a BA in response with an indication that continuing the UL TXOP burst is not OK, for example due to an upcoming scheduled low latency transmission. After the BA transmission, the AP may obtain medium access (e.g., potentially avoiding contention) to transmit (e.g., low latency) downlink (DL) data to another STA ("STA2"). STA2 may respond with a BA for the DL data.

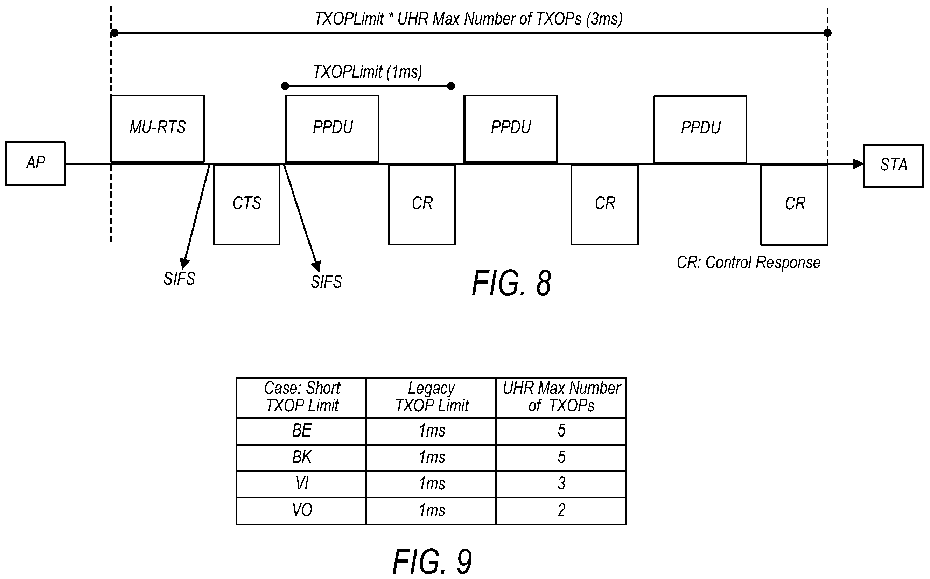

It may be possible to generalize techniques for limiting/interrupting TXOP bursting, for example for use for either DL or UL traffic directions, at least according to some embodiments. A short legacy TXOP limit may be used as one possibility for this. In such a scenario, it may be the case that a relatively short legacy TXOP limit is configured for all access categories, with a maximum number of allowed TXOP continuations also being configured as another parameter for each of various traffic types. A control response (CR) may be used to signal a preemption response and the intention of the TXOP responder to take over the remainder of the TXOP. A MU-RTS may set the NAV for the total duration of the TXOP (e.g., TXOPLimit * UHR Max Number of TXOPs, as one possibility). Figure 8 illustrates example aspects of a communication scenario between an AP and a STA using such a framework. Figure 9 is a table illustrating example TXOP limits and UHR Max Number of TXOP values that could be configured for various access categories (e.g., best effort, background, video, voice) in such a framework, as one possibility; it should be noted that other values are also possible, and that these values are not intended to be limiting.

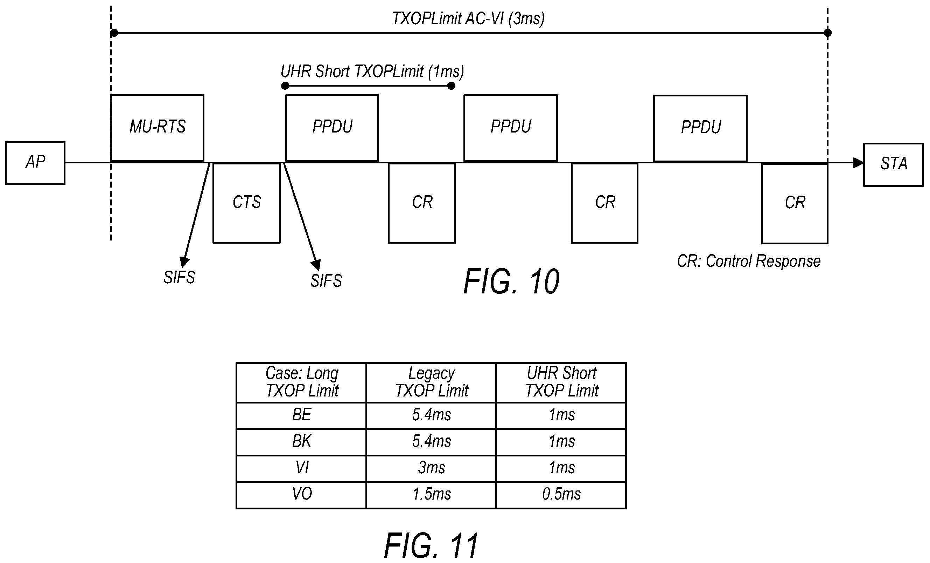

A (potentially) longer legacy TXOP limit may also be used as one possibility for generalizing techniques for limiting/interrupting TXOP bursting, at least according to some embodiments. In such a scenario, it may be the case that a longer legacy TXOP limit is configured, with a shorter UHR TXOP limit also being configured as another parameter for each of various traffic types, e.g., to limit TXOP durations for UHR STAs to allow more frequent checking of whether the TXOP responder requests TXOP preemption. A UHR AP or STA may transmit preemptable TXOPs. A control response (CR) may be used to signal a preemption response and the intention of the TXOP responder to take over the remainder of the TXOP. A MU-RTS may set the NAV for the total duration of the legacy TXOPLimit for the preemptable TXOP. Figure 10 illustrates example aspects of a communication scenario between an AP and a STA using such a framework. Figure 11 is a table illustrating example legacy TXOP limits and UHR short TXOP limit values that could be configured for various access categories (e.g., best effort, background, video, voice) in such a framework, as one possibility; it should be noted that other values are also possible, and that these values are not intended to be limiting.

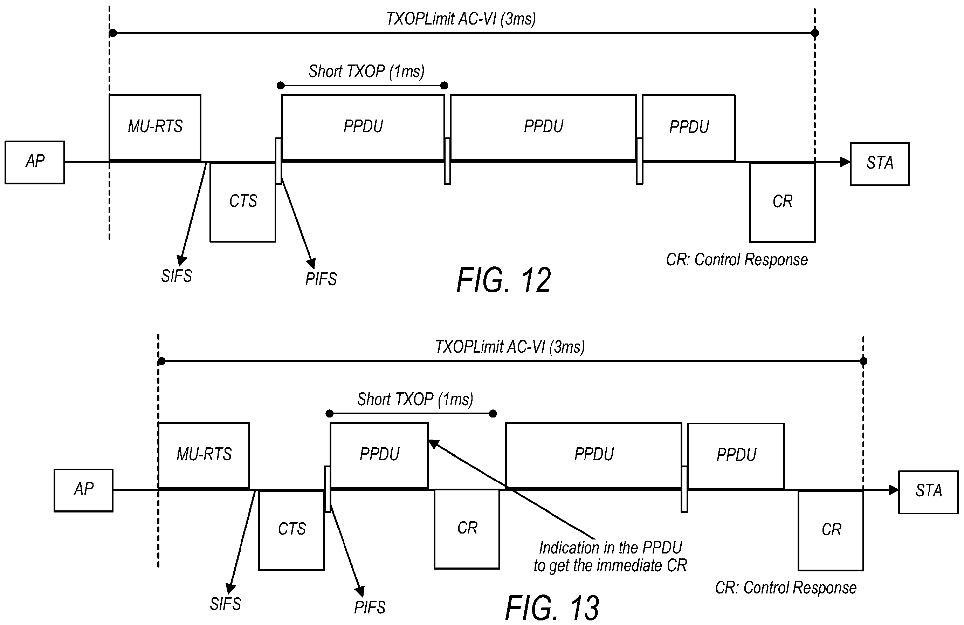

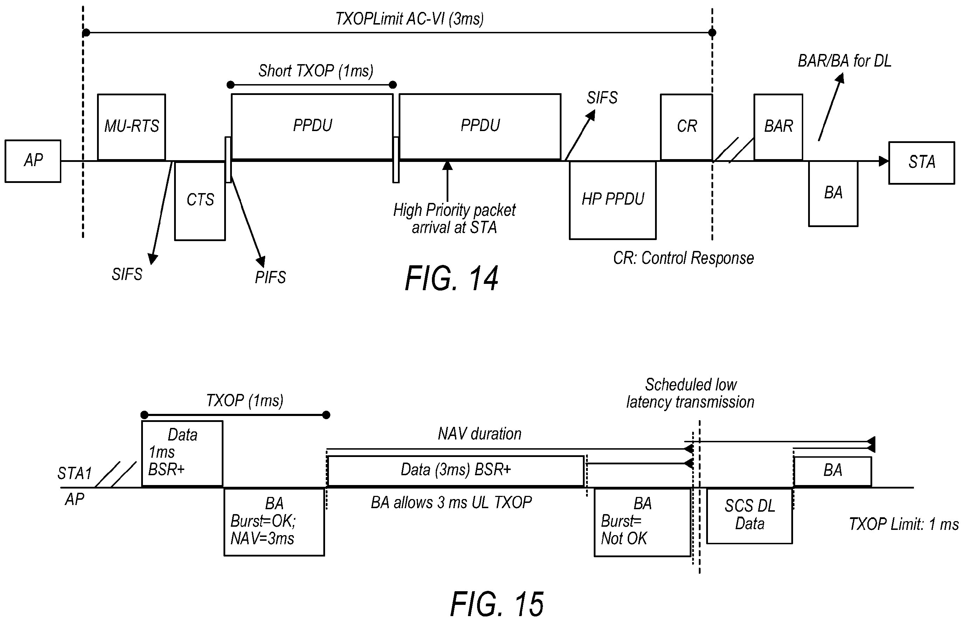

An approach using short TXOPs and CR-less preemption may also be possible. In such a case, instead of a BA (or other CR), there may be PIFS separation between data PPDUs. The TXOP responder may be able to take over the TXOP a SIFS (e.g., which is shorter than PIFS) after the end of each data PPDU. This approach may provide improved channel efficiency. However, there may be some possibility that other APs could transmit during the PIFS separation (or PIFS check for secondary channel) using such an approach. Acknowledgement (ACK) to the initiator's MPDUs may also be delayed to the end of the TXOP using such an approach. Figure 12 illustrates aspects of an example scenario using such an approach, in which no preemption occurs, according to some embodiments. In this case, as shown, short TXOPs may be performed within the legacy TXOP limit, and an ACK may be provided at the end of the TXOP. Figure 13 illustrates aspects of an example scenario using such an approach, in which the TXOP initiator can request an immediate CR for a PPDU, according to some embodiments. As shown, in the illustrated example, such a request is provided for the first PPDU. Otherwise, it may be the case that there will be PIFS between each two PPDUs transmitted by the TXOP initiator. Figure 14 aspects of an example scenario using such an approach, in which the preemption does occur, according to some embodiments. As shown, in the illustrated example, short TXOPs may be used within the overall TXOP; the STA takes over the TXOP by preempting it and then transmits a high priority (HP) PPDU. After the end of the TXOP, the AP sends a BAR to get the BA for the frames transmitted in the downlink.

In some embodiments, it may be possible that, according to such a framework, an AP can allow TXOPs with duration that is longer than TXOPLimit, e.g., if such a TXOP is requested by a STA. Such a request may be made using a BSR+ A-Control field in an UL data frame, e.g., to signal the amount of buffered data or the requested UL TXOP duration. The AP may, in response, signal that the STA may continue with the next UL TXOP in the UL TXOP burst with a duration field value in the BA, according to some embodiments.

Figure 15 illustrates an example timeline for a scenario in which an AP can allow a TXOP with a duration that is longer than the TXOPLimit based on a STA request in an UL data transmission, at least according to some embodiments. In the illustrated scenario, a STA ("STA1") may initiate a first TXOP and transmit UL data with an indication that continuing the UL TXOP burst is requested. The TXOPLimit for the access category of the UL data may be 1ms, and so the TXOP may have a 1ms duration. An AP may transmit a BA in response with an indication that continuing the UL TXOP burst is OK, and setting NAV to 3ms to indicate that the AP is allowing the next UL TXOP for STA1 in the UL TXOP burst to have a duration of 3ms. STA1 may continue the UL TXOP burst with a second UL data transmission with an indication that continuing the UL TXOP burst is (again) requested. As shown, the second UL data transmission may make use of the 3ms TXOP duration indicated by the AP. After the second UL data transmission in the burst, the AP may transmit a BA in response with an indication that continuing the UL TXOP burst is not OK, for example due to an upcoming scheduled low latency transmission. After the BA transmission, the AP may obtain medium access (e.g., potentially avoiding contention) to transmit (e.g., low latency) DL data to STA1. STA1 may respond with a BA for the DL data.

Another possibility for an AP to allow TXOPs with duration that is longer than the TXOPLimit set by the AP may include configuring STAs to initiate UL TXOPs with request-to-send (RTS) or multi-user RTS (MU-RTS) and using a clear-to-send (CTS) frame to adjust the allowed TXOP duration. Thus, a STA may send a MU-RTS frame to request a long UL transmission time. The AP may send a probe-before-talk (PBT) CTS frame to signal the UL TXOP duration, and potentially to send a longer NAV (e.g., to protect further transmission scheduled by the AP for after the UL TXOP). Providing such a way for STAs to obtain longer TXOPs may reduce overhead and overhearing STAs may have better power savings (e.g., their radios may be off or in reduced power operation for a longer time), in some embodiments. Additionally, supporting TXOP duration adjustment by an AP may allow the AP to allocate an UL TXOP to stop precisely before a low latency transmission, potentially with minimal overhead (e.g., no additional channel protection signaling may be needed due to the longer NAV indication), and generally keeping low latency data delays shorter and more deterministic.

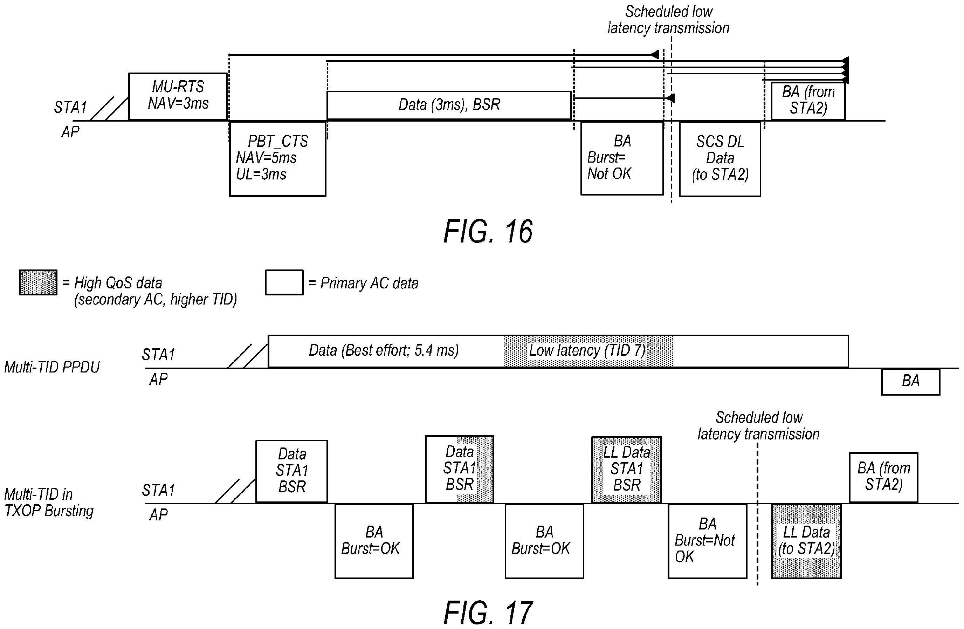

Figure 16 illustrates an example timeline for a scenario in which an AP can allow a TXOP with a duration that is longer than the TXOPLimit based on a STA request in a MU-RTS, at least according to some embodiments. In the illustrated scenario, a STA ("STA1") may initiate a first TXOP by transmitting a MU-RTS requesting a NAV of 3ms, e.g., even though the TXOPLimit for the access category of the UL TXOP may be shorter than 3ms (e.g., 1ms as one possibility). An AP may transmit a PBT CTS frame in response with an indication that the UL TXOP can be 3ms and setting NAV to 5ms (e.g., to protect the wireless medium for the AP for a scheduled low latency data transmission after the TXOP in addition to protecting the wireless medium for the TXOP). STA1 may transmit UL data, with an indication that continuing the UL TXOP burst is requested. After the UL data transmission, the AP may transmit a BA in response with an indication that continuing the UL TXOP burst is not OK, for example due to the upcoming scheduled low latency transmission. After the BA transmission, the AP may obtain medium access (e.g., potentially avoiding contention) to transmit SCS (e.g., low latency) DL data to another STA ("STA2"). STA2 may respond with a BA for the DL data.

Multi-TID aggregation may allow a STA to add higher AC MPDUs to a PPDU, in some instances. This may reduce the UL latency of the higher AC traffic of the transmitter. It may also be the case that multi-TID transmissions can be supported in TXOP bursting scenarios. In some embodiments, in order to the perform a multi-TID TXOP burst, it may be required that the first TXOP contains at least one MPDU of the AC in which the TXOP is obtained. The following TXOPs may contain frames from the same or higher ACs. Using shorter TXOPs may enable faster data acknowledgements and retransmissions, and multi-TID transmissions can help maintain QoS and improve network efficiency, at least in some embodiments.

Figure 17 illustrates example timelines for scenarios in which uplink data associated with multiple access categories can be transmitted in a multi-TID PPDU or a multi-TID TXOP burst, at least according to some embodiments. As shown, the uplink data may include primary AC data (e.g., best effort) and high QoS / low latency secondary AC data (e.g., TID 7). For the multi-TID PPDU scenario, one or more initial MPDUs of the PPDU may include the primary AC data, and one or more other MPDUs of the PPDU may include the secondary AC data. For the multi-TID TXOP burst scenario, the first TXOP may include at least a portion of the primary AC data, and subsequent TXOPs may include primary AC data, secondary AC data, or a combination thereof.

At least according to some embodiments, supporting a AP managed UL TXOP bursting framework such as described herein may have any or all of a variety of possible benefits. Such benefits could include improving transmission efficiency by reducing the number of contention periods / obtained UL TXOPs, which can help keep good system throughput even with shorter TXOP limits, which may help ensure good delay performance for low latency applications. Such a TXOP bursting approach may also allow the AP to obtain a TXOP within a short delay period, for example to better support transmission of high QoS SCS streams at scheduled times and/or so that R-TWT SPs may be started with TXOPLimit granularity, at least in some instances, among other possible benefits.

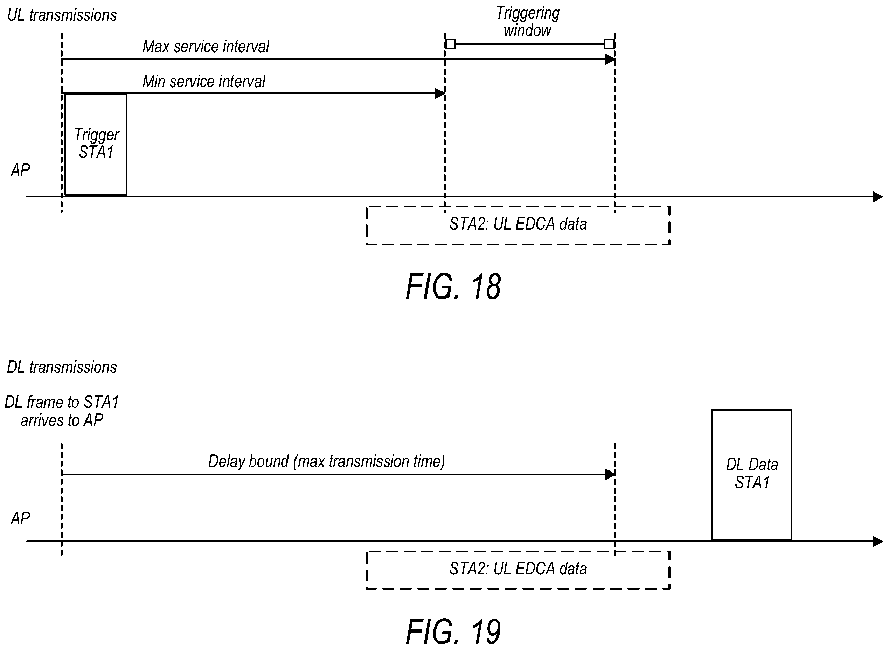

Figures 18-19 illustrate UL and DL transmission scenarios in which SCS scheduled data transmissions could be prevented from occurring at the correct time due to long data transmissions. At least according to some embodiments, such scenarios could be avoided by using lower TXOPLimits, potentially in combination with the AP managed UL TXOP bursting techniques described herein to improve network efficiency and throughput.

In particular, as shown in Figure 18, for a SCS scheduled UL transmission, a triggering window for a STA ("STA1"), which may extend from a minimum service interval to a maximum service interval, could be occupied entirely by an UL EDCA data transmission from another STA ("STA2"). As shown in Figure 19, for a SCS scheduled DL transmission, from the time that the DL frame to a STA ("STA1") arrives at an AP, an UL EDCA data transmission from another STA ("STA2") could occupy the wireless medium for such a duration as to push the DL data transmission to STA1 past the delay bound (maximum transmission time) for the SCS scheduled DL transmission. Thus, in either case, it may be possible that SCS based transmissions can be delayed if a long transmission is ongoing in the channel.

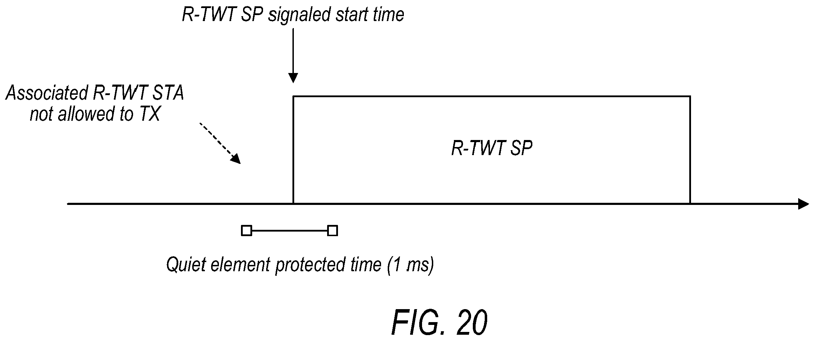

Figure 20 illustrates an example R-TWT SP timeline, at least according to some embodiments. In some instances, associated R-TWT capable STAs may be responsible to keep a record of R-TWT SP start times. It may be the case that an AP broadcasts the R-TWT SP start times in its beacon frame. Additionally, the AP may include Quiet elements to the beacon frames to protect the R-TWT SP start times. It may be the case that the Quiet elements have 1ms duration. TWT SP protection may be relatively slow to modify, for example taking multiple beacon intervals to add a new r-TWT SP start time or stop r-TWT SP start time protection, and continuous beacon reception may increase STA power consumption. It may also be the case that associated R-TWT capable STAs are responsible to avoid transmissions at the R-TWT SP start times. When all associated R-TWT STAs are silent at the R-TWT SP start time, it may be the case that OBSS may use secondary channel access (PIFS/SIFS check), and associated non-R-TWT STAs may transmit long UL TXOPs. It may be the case that the TWT SP start time is difficult to determine, however; the TWT SP protection may continue beyond TWT SP start time, and unnecessary long TWT SP protection may cause poor channel utilization. Note that when an AP schedules UL transmissions, it may be the case that STAs do not keep records of R-TWT SP start times or stop transmissions at R-TWT SP start times.

In some instances, it may be possible that AP managed UL TXOP bursting, in combination with shorter configured TXOPLimit values, may be used to reduce or avoid the need for STAs to be responsible for keeping records of R-TWT SP start times or avoiding transmissions at the R-TWT SP start times. For example, an AP may be able to choose whether to allow a UL TXOP burst to continue based at least in part on its knowledge of R-TWT SP start times, e.g., to avoid allowing a STA to transmit at a R-TWT SP start time, or to limit the extent to which an UL TXOP burst extends into a R-TWT SP (e.g., to be below a certain threshold). Thus, it could be possible that R-TWT SP configuration can be managed internally by the AP in a manner transparent to associated STAs, at least in some embodiments.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

In addition to the above-described exemplary embodiments, further embodiments of the present disclosure may be realized in any of various forms. For example, some embodiments may be realized as a computer-implemented method, a computer-readable memory medium, or a computer system. Other embodiments may be realized using one or more custom-designed hardware devices such as ASICs. Still other embodiments may be realized using one or more programmable hardware elements such as FPGAs.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a device (e.g., an AP 104 or a UE 106) may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method, comprising:
by a wireless device:
initiating a first transmit opportunity (TXOP) to perform an uplink transmission to an access point (AP) wireless device; and
receiving, from the AP wireless device, an acknowledgement indicating whether the wireless device can initiate a second TXOP without wireless medium contention.

2. The method of claim 1,
wherein the uplink transmission includes an indication of whether initiating a second TXOP without wireless medium contention is requested by the wireless device.

3. The method of any of the preceding claims,
wherein the uplink transmission includes an indication of a desired duration for the second TXOP.

4. The method of any of the preceding claims ,
wherein the acknowledgement includes an indication of an allowed duration for the second TXOP.

5. The method of any of the preceding claims, wherein the method further comprises:
receiving an indication of a TXOP duration limit from the AP wireless device; and
transmitting, to the AP wireless device, a multi-user (MU) request-to-send (RTS) frame indicating a desired duration for the first TXOP that is longer than the TXOP duration limit.

6. The method of claim 5, wherein the method further comprises:
receiving a clear-to-send (CTS) frame from the AP wireless device in response to the MU-RTS frame, wherein the CTS frame includes an indication of an allowed duration for the first TXOP that is longer than the TXOP duration limit.

7. A computer program comprising instructions for performing any of the methods of claims 1-6.

8. An access point (AP) wireless device, comprising:
one or more antennas;
a radio operably coupled to the one or more antennas; and
a processor operably coupled to the radio;
wherein the AP wireless device is configured to:
receive a first uplink transmission from a wireless device during a first transmit opportunity (TXOP); and
transmit, to the wireless device, an acknowledgement that includes an indication of whether the wireless device can initiate a second TXOP without wireless medium contention.

9. The AP wireless device of claim 8,
wherein when the transmitted indication indicates that the wireless device can initiate a second TXOP without wireless medium contention, the AP wireless device is further configured to:
receive a second uplink transmission from the wireless device during the second TXOP.

10. The AP wireless device of any of claims 8-9,
wherein the first uplink transmission includes an indication of whether the wireless device requests to initiate the second TXOP without wireless medium contention.

11. The AP wireless device of any of claims 8-10,
wherein the first uplink transmission includes an indication of a desired duration for the second TXOP.

12. The AP wireless device of any of claims 8-11,
wherein the acknowledgement includes an indication of an allowed duration for the second TXOP.

13. The AP wireless device of any of claims 8-12, wherein the AP wireless device is further configured to:
transmit an indication of a TXOP duration limit to the wireless device;
receive, from the wireless device, a multi-user (MU) request-to-send (RTS) frame that includes an indication of a desired duration for the first TXOP that is longer than the TXOP duration limit.

14. The AP wireless device of claim 13, wherein the AP wireless device is further configured to:
transmit, to the wireless device in response to the MU-RTS frame, a clear-to-send (CTS) frame that includes an indication of an allowed duration for the first TXOP that is longer than the TXOP duration limit.

15. The AP wireless device of any of claims 8-14, wherein the AP wireless device is further configured to:
determine whether the wireless device can initiate the second TXOP without wireless medium contention based at least in part on one or more of:
stream classification service (SCS) scheduled low latency data transmission timing; or
restricted target wake time service period (R-TWT SP) timing.
